# EUROPEAN PATENT APPLICATION

(11) **EP 4 831 059 A1**
(43) Date of publication of application: **28.10.2026**
(21) Application number: 26173335.6
(22) Date of filing: 20.04.2026
(51) Int. Cl.: B64C 3/56, F16C 11/04

(54) **FOLDING WING ARRANGEMENT WITH HINGE ASSEMBLY**

(30) Priority: 25.04.2025 GB 202506213
(71) Applicant: Airbus Operations Ltd, Filton, Bristol BS34 7PA (GB)
(72) Inventor: MORRELL, Paul, Bristol, BS34 7PA (GB); HAND, Matthew, Bristol, BS34 7PA (GB); HIPKISS, Richard, Bristol, BS34 7PA (GB)
(74) Representative: Abel & Imray LLP

(57) **Abstract**

An aircraft wing (10) having a fixed wing (12) and an outboard wing section (14) is disclosed, the outboard wing section (14) being rotatable about a hinge axis. A shaft (621) of a hinge pin (62) extends through interleaved lugs (58a, 58b) of the fixed wing (12) and the outboard wing section (14). A plurality of bearing elements (85a, 85b) are carried upon the hinge pin (62) by a bearing carrier (82). The bearing elements (85a, 85b) are longitudinally distributed along the shaft (621) of the hinge pin (62) such that each lug (58a, 58b) contains a dedicated bearing element (58a, 58b), each respective bearing element (85a, 85b) thereby being configured to provide a rotational interface between the shaft (621) of the hinge pin (62) and the respective one lug (58a, 58b). The bearing carrier (82) is configured to restrict longitudinal movement of the bearing elements (85a, 85b) along the shaft (621) to thereby retain the bearing elements (85a, 85b) in their respective lugs (58a, 58b).

## Description

### BACKGROUND OF THE INVENTION

The present invention concerns wing folding arrangements. More particularly, but not exclusively, this invention concerns an aircraft wing comprising a rotatable outboard wing section and hinge assembly, the hinge assembly comprises a hinge pin, a bearing carrier mounted upon a shaft of the hinge pin; and a plurality of bearing elements carried upon the shaft of the hinge pin by the bearing carrier. The invention also relates to methods of manufacturing an aircraft wing, and apparatus relating thereto.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. In such arrangements the moveable end of the wing may sometimes be referred to as a 'folding wing tip' or 'folding wing tip device'. However, it will be appreciated that such a term may also encompass a range of sizes, and where the hinge is relatively far inboard this may equally be considered an 'outboard wing section', a 'folding wing' or a 'movable wing'. For the purposes of the present disclosure these terms are used interchangeably.

In general terms, folding wing arrangements typically comprise: a mechanical joint having a hinge assembly comprising a hinge pin about which the outboard wing section moves, an actuation system for effecting the movement, and a latching system for latching the outboard wing section in the flight configuration. Some examples of these features are described below.

There are a number of mechanical joint designs for enabling rotation of a folding wing tip about an axis of rotation. The provision of interleaving lugs to form a hinge for a folding wing tip is known. Examples of such arrangements are shown in, for example, EP3560819 (Airbus Operations Limited) and US2019/0359311 (Airbus Operations GmbH). US 2020/0346740 (Boeing) and EP3360779 (Boeing) disclose a different type of joint. US 2020/0346740 discloses a folding wing pivotably coupled to a fixed wing about a hinge interface. The hinge interface comprises a pair of torque boxes through which the hinge pins pass. Each torque box has a length that is greater than its width.

Where an outboard wing section is configured to be rotated relative to the fixed wing section about a hinge pin, one or more bearing elements are typically provided between the hinge pin and the components rotatably mounted upon the hinge pin to provide a rotational interface between the hinge pin and those respective components. In this context, a bearing element may comprise a plain bearing, such as a bushing, which provides a sliding contact between respective rotating surfaces, or a roller bearing.

To ensure functionality and longevity of a hinge assembly, it is important that any such bearing elements remain suitably positioned between the hinge pin and any rotatably mounted components in use. Furthermore, there is a desire to improve the ease with which such hinge assemblies can be manufactured.

Aspects of the present invention seek to mitigate one or more of the above-mentioned problems. Alternatively or additionally, the present invention seeks to provide an improved wing folding arrangement.

### SUMMARY OF THE INVENTION

According to a first aspect of the invention, there is provided an aircraft wing, comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly comprises: a set of inboard lugs associated with the fixed wing and a set of outboard lugs associated with the outboard wing section, each of the respective inboard lugs and respective outboard lugs including a shaft-receiving bore; a hinge pin; a bearing carrier mounted upon a shaft of the hinge pin; and a plurality of bearing elements carried upon the shaft of the hinge pin by the bearing carrier. The inboard lugs are interleaved with the outboard lugs such that the respective shaft-receiving bores of the inboard lugs are aligned with the respective shaft-receiving bores of the outboard lugs. The shaft of the hinge pin extends through the respective shaft-receiving bores of the inboard lugs and outboard lugs. The bearing elements are longitudinally distributed along the shaft of the hinge pin such that each of the shaft-receiving bores contains a dedicated bearing element, each respective bearing element thereby being configured to provide a rotational interface between the shaft of the hinge pin and the respective one outboard lug or inboard lug. The bearing carrier may be configured to restrict longitudinal movement of the bearing elements along the shaft to thereby retain the bearing elements in their respective shaft-receiving bores.

The wing hinge assembly of the first aspect of the invention is provided with a bearing carrier which is configured to carry the bearing elements upon the shaft of the hinge pin and to restrict longitudinal movement of the bearing elements along the shaft of the hinge pin. The spacing of the bearing elements is such that a dedicated bearing element is received in each of the shaft-receiving bores; the term "dedicated", as used in this context, meaning that each dedicated bearing element is received in only one shaft-receiving bore. The use of a bearing carrier in the wing hinge assembly ensures that the bearing elements remain at their correct longitudinal positions along the shaft during operation of the wing. Furthermore, the use of a bearing carrier may facilitate manufacture of the wing hinge by being able to secure the bearing elements upon the shaft of the hinge pin in their correct positions prior to and during installation of the hinge pin in the wing hinge assembly.

Unless otherwise specified, the terms 'fore' and 'aft' are used herein to specify relative locations, along a direction parallel to the hinge axis. Unless otherwise specified, the term 'longitudinal', when used with reference to the aircraft wing is used to specify a direction generally parallel with the hinge axis. The shaft of the hinge pin may define a longitudinal axis and the longitudinal direction may be defined by the longitudinal axis of the hinge pin. Unless otherwise specified, there terms 'inboard' and 'outboard' are used herein to specify relative locations, along a direction perpendicular to the hinge axis.

The hinge pin may define the hinge axis. The longitudinal direction may be coincident with the hinge axis. The longitudinal direction may be parallel with the hinge axis. There may be at least two bearing elements carried by the bearing carrier. There may be at least three, preferably at least four, or more preferably at least five bearing elements carried by the bearing carrier. There may, for example, be six bearing elements carried by the bearing carrier.

The bearing carrier may comprise at least one retainer configured to abut with one or more of the bearing elements to prevent longitudinal movement of the one or more of the bearing elements along the shaft. The retainer may project in a radially outwards direction from the hinge pin. The retainer may project from a surface of a sleeve of the bearing carrier. The retainer may extend circumferentially around the sleeve.

The bearing carrier may comprise a first retainer at a first longitudinal end of the bearing carrier and a second retainer at an opposite second longitudinal end of the bearing carrier such that the plurality of bearing elements is positioned between the first and second retainers. The first retainer may restrict longitudinal movement of the bearing elements along the shaft in a first direction. The second retainer may restrict longitudinal movement of the bearing elements along the shaft in an opposite second direction. The bearing carrier may comprise only a first and second retainer, and no further retainers.

The respective bearing elements may be configured to abut with one another along the length of the shaft. In this case, the longitudinal distance between the respective first and second retainers may be approximately equal to the combined length in the longitudinal direction of the bearing elements situated between the first and second retainers, such that the bearing elements are unable to move substantially along the bearing carrier, and thereby remain in their respective shaft-receiving bores in use.

The bearing carrier may comprise a plurality of longitudinally spaced retainers. One of the plurality of retainers may be positioned between each of the bearing elements to longitudinally space the bearing elements along the shaft, the longitudinal spacing between the retainers being configured to retain the respective bearing elements in their respective shaft receiving bores. The spacing between respective retainers may be approximately equal to the length of the bearing element positioned between the respective retainers such that the bearing element is unable to move substantially along the bearing carrier, and thereby remains in its respective shaft-receiving bore in use. The number of retainers may be at least equal to the number of bearing elements carried by the bearing carrier. There may be n+1 retainers, where n is the number of bearing elements carried by the bearing carrier.

The bearing carrier may comprise a sleeve which extends longitudinally along the shaft. At least two of the bearing elements may be carried upon the sleeve. The or each retainer may project from a surface of the sleeve. The sleeve may be mounted upon the shaft with a close fit. The sleeve may have a thickness of between approximately 0.5 millimetres to 1 millimetre. The sleeve may be configured to degrade or be worn away over time, leaving the retainers mounted upon the shaft to maintain the positions of the respective bearing elements; in such embodiments, the thickness of the sleeve may be as low as approximately 50 microns, or lower, if required.

The hinge assembly may comprise a bearing element which is not carried upon the sleeve and is spaced-apart in the longitudinal direction along the hinge pin from a bearing element carried upon the sleeve by a retainer. The bearing element which is not mounted upon the sleeve may be directly carried by the shaft of the hinge pin. The bearing element not carried upon the sleeve may be an end bearing element. The end bearing element may comprise a radially extending flange which prevents the end bearing element being moved through its shaft receiving bore.

The bearing carrier may comprise a polymer. The polymer may comprise a fluoropolymer such as PTFE, PVDF, or PFPE. The bearing carrier may comprise a lubricant blended with a polymer such that the bearing carrier also provides a lubricating function. For example, the bearing carrier may comprise lubricants such as molybdenum, boron nitride, and/or graphite. The bearing carrier may a comprise a bioplastic such as PLA, PBAT, PBS, PCL, and/or PHA.

In the aircraft wing of the first aspect of the present invention, a bearing element provides a rotational interface between the shaft of the hinge pin and one of an outboard lug or an inboard lug. The bearing element may provide one or more sliding surfaces between the shaft of the hinge pin and the lug. A bearing element may comprise a bushing. The bearing element may provide a rotating interface between the shaft of the hinge pin and the lug. A bearing element may comprise a roller bearing. The skilled person will be aware of a variety of types of bearing element suitable for use in the hinge assembly. Each bearing element may extend circumferentially around the hinge pin. One or more of the bearing elements may extend circumferentially around the bearing carrier.

The aircraft wing may comprise a joint assembly. The joint assembly may comprise the hinge assembly. The inboard set of lugs of the fixed wing are provided by a first structural fitting of the joint assembly, and the outboard set of lugs of the outboard wing section are provided by a second structural fitting of the joint assembly. The fixed wing comprises a tip with the first structural fitting fixedly connected thereto, and the outboard wing section comprises a root with the second structural fitting connected thereto. By providing first and second structural fittings, embodiments of the invention may be provided without necessarily requiring substantial modification to the structural components at the tip/root of the fixed wing/outboard wing section. For example, the structural fittings may be fixable to conventional wing structures in the fixed wing/outboard wing section, such as spars and ribs.

The hinge assembly may comprise a fore set of interleaving lugs and an aft set of interleaving lugs. The hinge assembly may comprise a fore hinge pin and an aft hinge pin, extending through the fore and aft sets of interleaving lugs respectively. The set of interleaved lugs described above may be the fore set of interleaving lugs or the aft set of interleaving lugs.

The hinge assembly may comprise an actuator located between the fore set of lugs and the aft set of lugs, the actuator being configured to rotate the outboard wing section about the hinge axis to move the wing between the flight configuration and the ground configuration. The wing may further comprise a latch assembly. The latch assembly may be located in the fixed wing and inboard of the actuator. A fore latching arm may be associated with the outboard wing section. An aft latching arm associated with the outboard wing section. The latch assembly and the fore and aft latching arms may be configured such that when the wing is in the flight configuration, the fore latching arm extends fore of the latch assembly and the aft latching arm extends aft of the latch assembly such that the latch assembly is between the latching arms. The latch assembly may comprise an aft latch pin, deployable in the aft direction to latch the aft latching arm, and a fore latch pin, deployable in a forward direction, to latch the fore latching arm, such that when the wing is in the flight configuration and the fore and aft latch pins are deployed, the outboard wing section is latched to the fixed wing.

The combination of the structure of the hinge and the layout of the hinge, the actuator, the latch assembly and the latching arms may enable a space-efficient arrangement whilst also enabling effective load transfer between the outboard wing section and the fixed wing. The arrangement may also be suitable for scaling to different sizes such that it can be used on a number of differently sized wings (such as wings for narrow body and wide-body aircraft).

**In** some embodiments, the hinge axis may be toed in or out. In preferred embodiments, the hinge axis may be orientated substantially in a line-of-flight direction. In such embodiments the terms fore/aft and inboard/outboard are also commensurate with the relative locations, in the line-of-flight direction and the spanwise direction respectively.

The, or each, set of interleaving lugs may comprise a lug associated with the fixed wing or the outboard wing section, received in a clevis associated with the other of the fixed wing or the outboard wing section. The fixed wing may comprise a fore set of lugs and an aft set of lugs, through which the hinge axis extends. The outboard wing section may comprise a fore set of outboard lugs, interleaving with the fore set of inboard lugs of the fixed wing to form the fore set of interleaving lugs. The outboard wing section may comprise an aft set of outboard lugs, interleaving with the aft set of inboard lugs of the fixed wing to form the aft set of interleaving lugs. Each set of interleaving lugs may comprise a series of aligned shaft-receiving bores through which the respective hinge pin is received. The hinge pins may link the fixed wing and the outboard wing section, to facilitate rotational movement of the outboard wing section about the hinge axis.

The joint assembly may comprise an actuator. The actuator may be attached between the first structural fitting and the second structural fitting. The attachment may be such that rotation of the actuator rotates the second structural fitting, relative to the first structural fitting. The actuator may be attached between the fore sets of lugs and the aft sets of lugs.

In preferred embodiments of the invention, the actuator and the hinge axis are coaxial. The actuator may comprise a rotational axis about which an output member rotates.

The actuator may be driven by a remote motive force (for example the actuator may be driven by a remote motor, via a transmission). The actuator may be a rotary actuator. The actuator may be a geared rotary actuator (GRA). The use of a GRA has been found to be especially beneficial in the context of this arrangement as it is especially space-efficient and tends to be a good fit between the sets of interleaving lugs.

According to a second aspect of the invention, there is provided an aircraft wing, comprising a fixed wing; an outboard wing section outboard of the fixed wing; and a hinge assembly connecting the outboard wing section to the fixed wing. The aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly comprises a set of interleaving lugs comprising lugs forming part of the fixed wing and lugs forming part of the outboard wing section; a hinge pin extending through the set of interleaving lugs, thereby forming a hinge; and an inboard bearing element positioned within each lug associated with the fixed wing, the inboard bearing element(s) being configured to provide a rotational interface between each respective lug associated with the fixed wing and the hinge pin; an outboard bearing element positioned within each lug associated with the outboard wing section, the outboard bearing element(s) being configured to provide a rotational interface between each respective lug associated with the outboard wing section and the hinge pin; and a bearing carrier comprising one or more retainers configured to restrict longitudinal movement of the respective inboard and outboard bearing elements along the shaft to thereby retain the bearing elements within their respective lugs.

In any of the aspects of the invention, it may be that the outboard section of the wing is configured to be extended out to a position in which the wing is in the flight configuration, and is configured to be retracted to a position in which the wing is in the ground configuration and the total length of the wing is reduced. In the flight configuration the trailing edge of the outboard wing section may be a continuation of the trailing edge of the fixed wing. The leading edge of the outboard wing section may be a continuation of the leading edge of the fixed wing, such that there is a smooth transition from the fixed wing to the outboard wing section. It will be appreciated that there may be a smooth transition, even where there are changes in sweep or twist at the fixed wing/ outboard wing section. However, there are preferably no discontinuities at the junction between the fixed wing and outboard wing section.

The outboard wing section may be a wing tip extension, for example a generally planar tip extension. In other embodiments, the outboard wing section may comprise, or consist of, a non-planar device, such as a winglet. The outboard wing section may include, for example, trailing edge moveable devices for control (ailerons) or leading edge devices for stall protection, such as slats or droop nose devices.

When the wing is in the ground configuration (e.g. with the outboard wing section retracted), the aircraft incorporating the wing, may be unsuitable for flight. For example, the outboard wing section may be aerodynamically and/or structurally unsuitable for flight in the ground configuration.

With the push for higher and higher aspect ratio wings, the embodiments of the invention are well suited to use in such wings (i.e. long narrow wings), which typically have confined space in which to mount equipment. The aspect ratio of a wing is defined as the ratio of its span to its mean chord and equal to the square of the span divided by the wing area. The aspect ratio of the wing may be greater than 8, possibly greater than 9, and optionally 10 or higher. In some embodiments it may be that the aspect ratio of the wing is 11 or 12 or more.

The maximum depth of the wing (height between upper and lower wing covers) at the hinge axis may be less than 50cm, and in some embodiments may be less than 35cm. The depth of the wing at the hinge axis may be less than 32.5cm, preferably less than 27.5cm, and optionally less than 22.5cm.

The length of the outboard wing section of the aircraft wing may be more than 3m, preferably more than 4m, and more preferably more than 5m.

The span ratio of the fixed wing relative to the outboard wing section may be such that the fixed wing comprises at least 60%, 70%, 80%, 90%, or more, of the overall span of the wing. The span ratio of the fixed wing relative to the outboard wing section may be such that the outboard wing section comprises at least 10%, 20%, 30%, 40%, or more, of the overall span of the wing.

The hinge axis of the aircraft wing may be more than 12.5m away from the root of the wing, preferably more than 15m away, and optionally more than 17m away.

According to a third aspect of the invention there is also provided an aircraft including the aircraft wing according to the first or second aspects of the invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or 100 tonnes or more. The aircraft may have an operating empty weight of at least 20 tonnes, optionally at least 30 tonnes, and possibly about 40 tonnes or more.

In the flight configuration, the span of the aircraft may exceed an airport compatibility limit. In the ground configuration the span may be reduced such that the span (with the wing in the ground configuration) is less than, or substantially equal to, the airport compatibility limit. The airport compatibility limit is a span limit (for example relating to clearance restrictions for buildings, signs, other aircraft). The compatibility limit is preferably a gate limit.

It may be that the span of the aircraft in the ground configuration is less than a wing span limit and that the span of the aircraft wing in the flight configuration is greater than the wing span limit. The wing span limit may be 36m. The wing span limit may be 52m. The wing span limit may be 65m. The wing span limit may be 80m. It may be that the span of the aircraft wing is at least 8 metres shorter (possibly 10 metres or more shorter) in the ground configuration than in the flight configuration.

It may be that the outboard wing section undergoes a rotation of more than 45 degrees, preferably more than 60 degrees, and optionally more than 75 degrees as it moves from the ground configuration to the flight configuration. A higher amount of rotation may enable a greater difference in wing span as between the ground configuration and the flight configuration.

The mean chord of the wing may be less than 6.5m, less than 5m, and more preferably less than 4.5m. The chord of the wing at the interface between the fixed wing and the outboard wing section may be less than 5m. For example, for an aircraft having a wing span in the ground configuration of between 65m and 80m, the chord of the wing at the interface between the fixed wing and the outboard wing section may be greater than 3m but less than 5m. For an aircraft having a wing span in the ground configuration of 65m or less, the chord of the wing at the interface between the fixed wing and the outboard wing section may be less than 4m, and may optionally be less than 3m.

According to a fourth aspect of the invention there is also provided a joint assembly for the aircraft wing according to the first or second aspects of the invention, the joint assembly comprising a first structural fitting for fixing to the tip of the fixed wing, a second structural fitting for fixing to the root of the outboard section of wing, a hinge pin, a bearing carrier mounted upon a shaft of the hinge pin, and the plurality of bearing elements carried upon the shaft of the hinge pin by the bearing carrier. The inboard lugs of the first structural fitting are interleaved with the outboard lugs of the second structural fitting such that the respective shaft-receiving bores of the inboard lugs are aligned with the respective shaft-receiving bores of the outboard lugs. The shaft of the hinge pin extends through the respective shaft-receiving bores of the inboard lugs and outboard lugs. The bearing elements are longitudinally distributed along the shaft of the hinge pin such that each of the shaft-receiving bores contains a dedicated bearing element, each respective bearing element thereby being configured to provide a rotational interface between the shaft of the hinge pin and the respective one outboard lug or inboard lug; The bearing carrier is configured to restrict longitudinal movement of the bearing elements along the shaft to thereby retain the bearing elements in their respective shaft-receiving bores.

According to a fifth aspect of the invention, there is provided a method of manufacturing the aircraft wing of the first or second aspects of the invention. The method comprising the steps of: forming a bearing element preassembly by longitudinally spacing the plurality of bearing elements along a bearing carrier, the bearing carrier being configured to restrict longitudinal movement of the bearing elements along the bearing carrier; installing the bearing element preassembly onto the shaft of the hinge pin to provide an arrangement in which the plurality of bearing elements are longitudinally spaced along the shaft of the hinge pin by the bearing carrier and in which the plurality of bearing elements are retained on the shaft of the hinge pin by the bearing carrier; inserting the hinge pin and bearing element preassembly through the respective shaft receiving bores of the interleaved inboard lugs and outboard lugs to a position in which each bearing element is positioned in a respective one of the shaft receiving bores.

The bearing carrier may define a longitudinal axis. The longitudinal axis of the bearing carrier may be coincident with the longitudinal axis of the shaft of the hinge pin when the bearing carrier is received on the shaft. The bearing carrier may comprise a sleeve and a retainer which projects from a surface of the sleeve. The sleeve may extend along a longitudinal length direction, thereby defining a longitudinal axis of the bearing carrier (or sleeve). The bearing element preassembly may comprise at least two bearing elements longitudinally arranged along the sleeve; and longitudinal movement of the at least two bearing elements along the sleeve is restricted by at least one of the bearing elements abutting with the retainer.

The hinge pin and bearing element preassembly may be inserted into the respective shaft receiving bores from a first side of the set of interleaving lugs. The method may comprise the step of inserting a further bearing element into the shaft receiving bore of an interleaving lug from an opposite second side of the set of interleaving lugs. The method may comprise the subsequent step of securing a bolt to the distal end of the hinge pin.

According to a sixth aspect, the present invention provides a bearing element preassembly for use in the method of the fifth aspect of the invention. The bearing element preassembly comprising a bearing carrier and at least two bearing elements, wherein the bearing carrier comprises a sleeve and a retainer which projects from a surface of the sleeve; the at least two bearing elements are longitudinally arranged along the sleeve; and longitudinal movement of the at least two bearing elements along the sleeve is restricted by at least one of the bearing elements abutting with the retainer.

It will of course be appreciated that features described in relation to one aspect of the present invention may be incorporated into other aspects of the present invention. For example, an aircraft wing according to one aspect of the invention, may incorporate any of the features described with reference to an aircraft wing according to another aspect of the invention and *vice versa.*

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3a and 3b are perspective views showing the joint between the fixed wing and the outboard wing section of Figure 1;
Figure 4a is a schematic cross-sectional view showing the fore set of interleaving lugs without the fore hinge pin installed and Figure 4b shows the fore set of interleaving lugs with the fore hinge pin installed.
Figure 5a is a schematic cross-sectional drawing of a bearing element preassembly according to an embodiment of the invention;
Figure 5b shows a bearing carrier of the bearing element preassembly in isolation;
Figure 5c shows the bearing element preassembly mounted upon a hinge pin;
Figure 6 is a flow chart showing the steps of manufacturing an aircraft wing in accordance with an embodiment of the invention;
Figure 7a is a schematic cross-sectional drawing of a bearing element preassembly according to a further embodiment of the invention; and
Figure 7b is a schematic cross-sectional view showing the fore set of interleaving lugs of the hinge assembly of an aircraft wing according to a further embodiment of the invention with the fore hinge pin installed.

### DETAILED DESCRIPTION

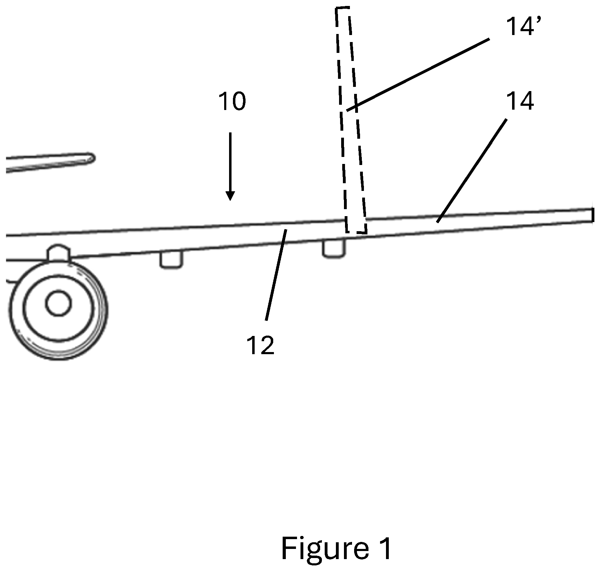

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

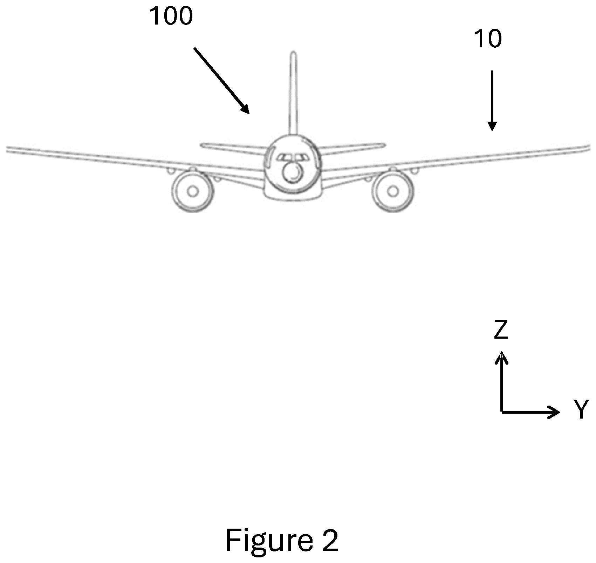

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

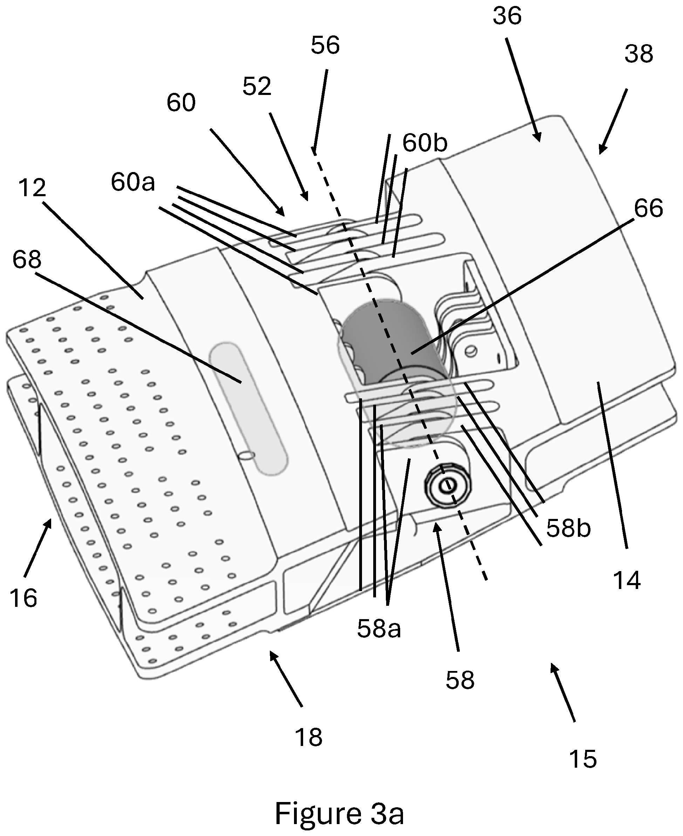

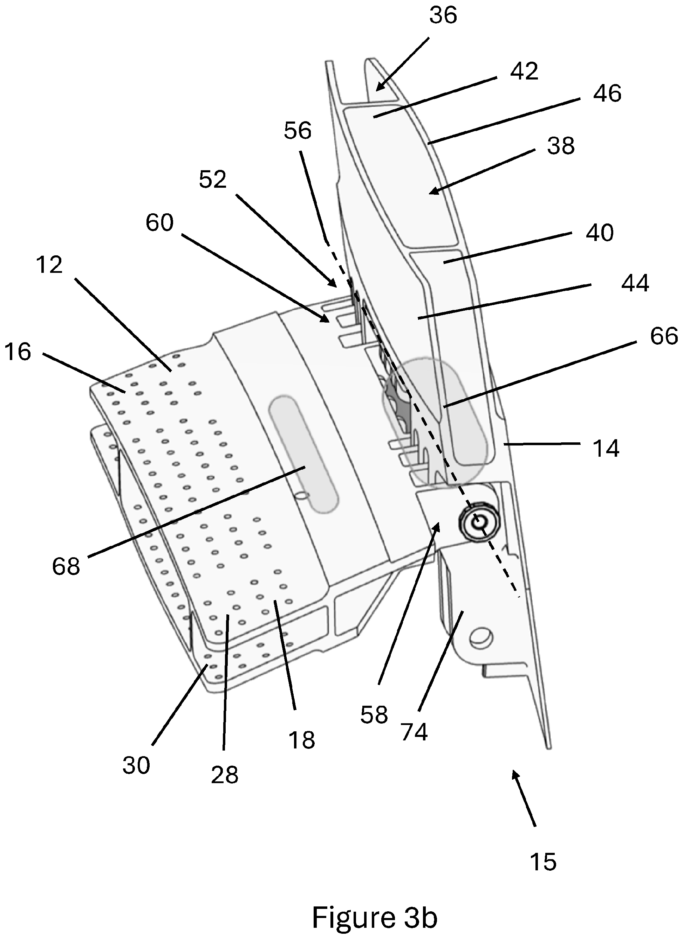

Figures 3a and 3b are isometric views showing the joint assembly 15 between the fixed wing 12 and the outboard wing section 14, when the wing is in the flight configuration (see Figure 3a) and the ground configuration (see Figure 3b). Various components, such as the wing covers, have been omitted for clarity. The fixed wing 12 comprises a tip 16 with a first structural fitting 18 connected thereto. The structural fitting 18 connects to the front and rear spars of the fixed wing 12 such that the structural fitting 18 is fixedly attached to the tip 16 of the fixed wing 12. The outboard wing section 14 comprises a root 36 with a second structural fitting 38 connected thereto. The second structural fitting 38 is connected to the root 36 of the outboard wing section 14 in a similar manner to the corresponding structural fitting 18 at the tip of the fixed wing 12, namely: the second structural fitting 38 connects to front and rear spars of the outboard wing section 14 such that the second structural fitting 38 is fixedly attached to the root 36 of the outboard wing section 14.

The fixed wing 12 and the outboard wing section 14 are connected via a hinge assembly 52. The hinge assembly 52 allows rotation of the outboard wing section 14, about a hinge axis 56, between the position shown in Figure 3a (when the wing is in a flight configuration), and the position shown in Figure 3b, when the wing is in the ground configuration.

In the presently described embodiment, the hinge axis 56 is substantially parallel to the line of flight (and thus substantially parallel to the X-direction, aligned with the longitudinal axis of the fuselage of the aircraft). In the description below, various aspects of the design are described with reference to their location in the wing. The fore-aft direction is along the X axis. The inboard-outboard direction is in the Y-axis, running perpendicular to the X-direction and extending spanwise, perpendicular to the longitudinal axis of the aircraft.

The second structural fitting 38, of the outboard wing section 14, comprises a set of three outboard fore lugs 58b interleaving with a corresponding set of four inboard fore lugs 58a on the first structural fitting 18, of the fixed wing 12 (in some of the Figures only some of the lugs may be labelled for clarity). Similarly, the second structural fitting 38 of the outboard wing section 14 comprises a set of three outboard aft lugs 60b interleaving with a corresponding set of four inboard aft lugs 60a on the first structural fitting 18 of the fixed wing 12. The fore lugs 58a, 58b and aft lugs 60a, 60b of the structural fittings 18, 38 are integrally formed with the respective structural fittings 18, 38.

The hinge assembly 52 comprises the fore set of interleaving lugs 58 and the aft set of interleaving lugs 60. Respective fore 62 and aft 64 hinge pins 62, 64 extend through the respective fore 58 and aft 60 sets of interleaving lugs, thereby forming a hinge. The fore lugs 58a of the structural fitting 18 of the fixed wing 12 are thus connected to the fore lugs 58b of the structural fitting 38 of the outboard wing section 14, and the aft lugs 60 of the structural fitting 18 of the fixed wing 12 are connected to the aft lugs 60b of the structural fitting 38 of the outboard wing section 14, for rotation relative to one another via the fore and aft hinge pins 62, 64.

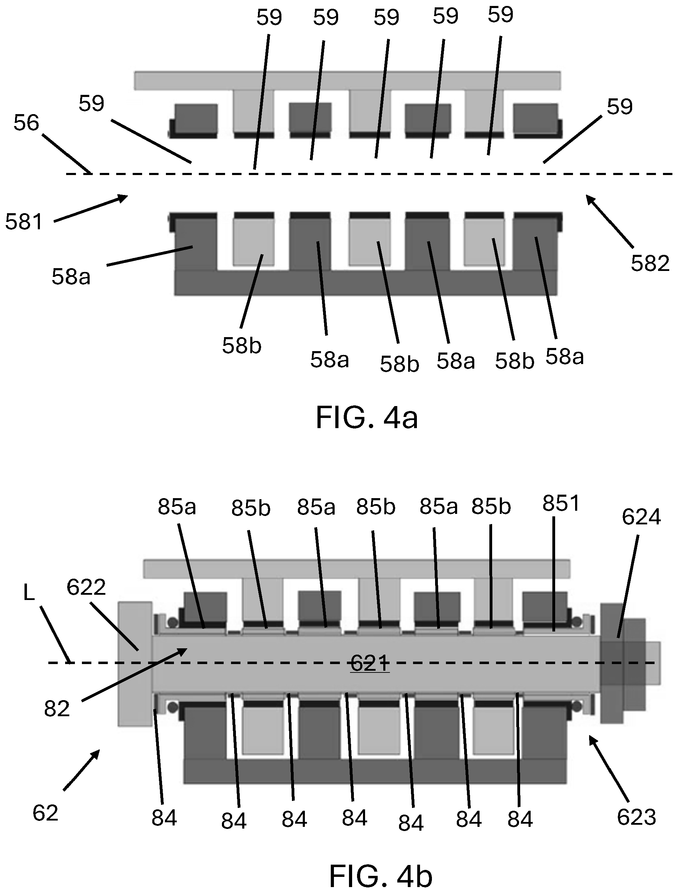

The fore set of interleaving lugs 58 is similarly arranged to the aft set of interleaving lugs 60, therefore the configuration of the hinge assembly 52 at the fore 58 and aft 60 sets of interleaving lugs is described below with reference to the fore set of interleaving lugs 58 only, which are shown in Figure 4a without the fore hinge pin 62 installed and in Figure 4b with the fore hinge pin 62 installed.

Each of the inboard fore lugs 58a and outboard fore lugs 58b includes a shaft-receiving bore 59, with each of the respective shaft-receiving bores 59 being aligned with one another along the hinge axis, as can be best seen in Figure 4a. With reference to Figure 4b, the shaft 621 of the hinge pin 62 extends through the respective shaft-receiving bores 59 of the respective inboard lugs 58a and outboard lugs 58b. A plurality of bearing elements 85a, 85b, 851 are longitudinally distributed along the shaft 621 of the hinge 62 pin (i.e. along a longitudinal axis L of the shaft) such that each of the shaft-receiving bores 59 contains a dedicated bearing element 85a, 85b, 851. Therefore, in the presently described embodiment of the invention, a total of seven bearing elements 85a, 85b 851 are distributed along the shaft 621 of the hinge pin: four inboard bearing elements 85a, 851 which are situated in the four respective shaft-receiving bores 59 of the inboard lugs 58a and three outboard bearing elements 85b which are situated in the three respective shaft-receiving bores 59 of the outboard lugs 58b.

A bearing carrier 82, which is described in more detail below, is mounted upon the shaft 621 of the hinge pin 62, between the hinge pin 62 and the respective bearing elements 85, such that the bearing elements 85a, 85b are carried upon the shaft 621 by the bearing carrier 82. It should be noted that, in the presently described embodiment of the invention, the bearing element 851 at the distal end 623 of the shaft 621 (i.e. the end opposite to the head 662 of the hinge pin) is not mounted upon the bearing carrier 82. The bearing carrier 82 comprises retainers 84 which are longitudinally spaced along the shaft 621 and are configured to abut with the bearing elements 85a, 85b, 851 to restrict longitudinal movement of the bearing elements 85a, 85b, 851 along the shaft 621 and thereby retain the bearing elements 85a, 85b, 851 in their respective shaft-receiving bores 59.

Each respective bearing element 85a, 85b, 851 is configured to provide a rotational interface between the shaft 621 of the hinge pin 62 and one of the respective inboard 58a or outboard 58b lugs to facilitate operation of the hinge assembly 52 during movement of the wing 100 between the flight configuration and the ground configuration. Furthermore, the bearing carrier 82 ensures that the bearing elements 85a, 85b remain within their respective shaft receiving bores 59 during operation of the hinge assembly. The bearing carrier 82 also facilitates assembly of the wing hinge assembly 52 in a method according to an embodiment of the present invention which is described in more detail below. In the presently described embodiment of the invention, each bearing element is a plain bearing, also known as a bushing. However, it is within the scope of the invention for other types of bearing element to be used.

The hinge assembly 52 also comprises a geared rotary actuator (GRA) 66. The GRA 66 is located along the hinge axis 56 and is centrally positioned (along the hinge axis 56) between the fore and aft sets of interleaving lugs 58, 60. The layout of the GRA 66 within an arrangement having a hinge comprising two sets of interleaving lugs, is especially space-efficient. The GRA 66 has a rotary input (not shown) via a GRA transmission (not shown). The rotary input drives a planetary gearbox within the GRA 66. The GRA 66 has a series of stages, alternately connected to either the fixed wing 12 or the outboard wing section 14 (or more specifically, connected to the structural fittings 18, 38 thereof). The rotary input drives rotation of the stages coupled to the outboard wing section 14 thereby rotating the outboard wing section 14 about the hinge axis 56 and towards the ground configuration.

The wing 10 also comprises a latch assembly 68. The latch assembly 68 is arranged to selectively allow or prevent the movement of the wing between the flight and ground configurations, by retracting or extending a pair of latch pins into latching arms and latch receivers. The outboard wing section 14 comprises a pair of fore latching arms 74 and a pair of aft latching arms (not shown). The pair of fore latching arms 74 is integrally formed as an extension of corresponding fore lugs 58b and the pair of aft latching arms is integrally formed as an extension of the aft lugs 60b of the outboard wing section 14. The retracted position of the latch pins allows for relative movement between the latching arms 74 and the latch receivers. This therefore allows movement of the wing between the flight and ground configurations via actuation of the GRA 66. In contrast, when the latch pins are in the extended position, the pins inhibit the movement between the latching arms 74 and the respective latch pin receivers, thereby latching the wing in the flight configuration and transferring loads across the joint assembly 15 and into the fixed wing structure.

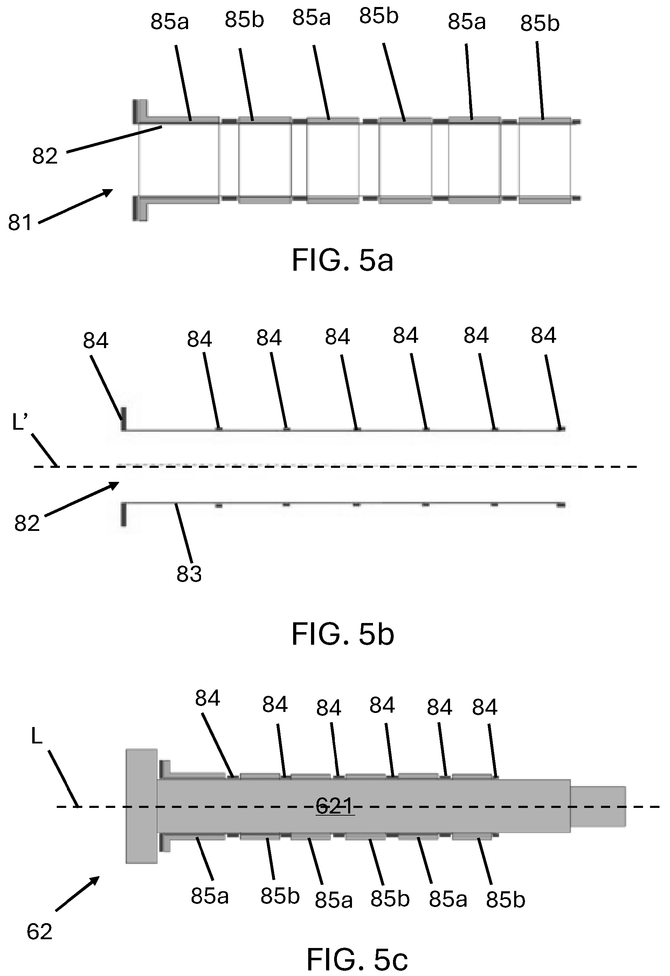

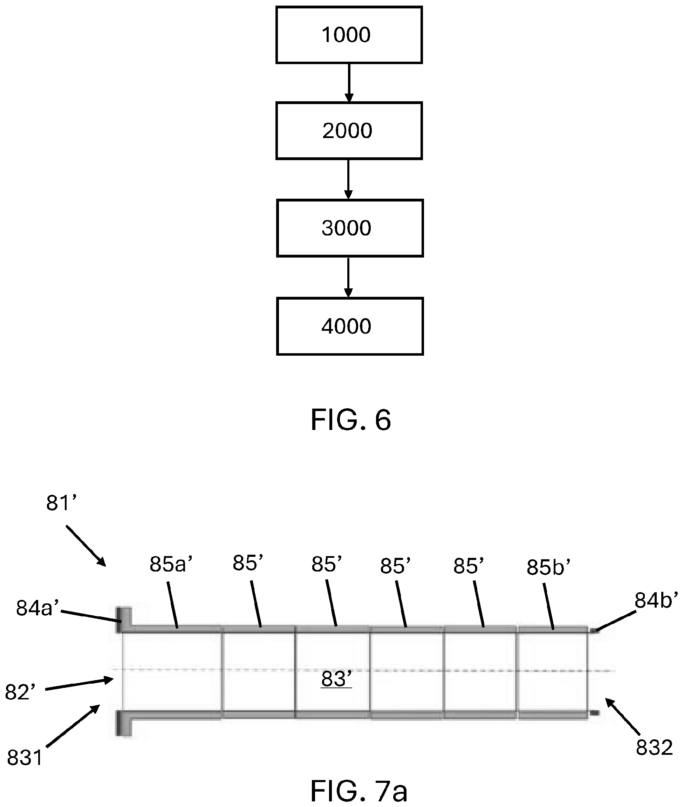

As mentioned above, the bearing carrier 82 also facilitates assembly of the wing hinge assembly 52 in a method according to an embodiment of the present invention, as will now be described with reference to Figures 5 and 6. Prior to installation in the respective fore 58 and aft 60 sets of interleaving lugs, the hinge pins 62, 64 are each provided with a bearing element preassembly 81, which is shown in isolation in Figure 5a. The bearing element preassembly 81 includes the bearing carrier 82 and six bearing elements 85a, 85b of the plurality of seven bearing elements 85a, 85b, 851 (i.e. all bearing elements except the bearing element 851 positioned at the distal end 623 of the shaft 621).

The bearing carrier 82, which is shown in isolation in Figure 5b, comprises an elongate sleeve 83 and a plurality of retainers 84 which are longitudinally spaced along the sleeve 83 (i.e. along the longitudinal axis L' of the sleeve). The sleeve 83 is configured to be received on the shaft 621 of the hinge pin 62 with a close fit, and such that the longitudinal axis of the sleeve L' is coincident with the longitudinal axis L of the shaft 621. The retainers 84 project radially outwards from and extend circumferentially around the sleeve 83. In a first step 1000, the plurality of bearing elements 85a, 85b are installed on the sleeve 83 of the bearing carrier 82 to provide the bearing element preassembly 81, which is shown in Figure 5b. The bearing elements 85a, 85b are longitudinally distributed along the sleeve 83 of the bearing carrier 82, with each respective bearing element 85a, 85b being positioned between two respective retainers 84 which abut with the bearing elements 85a, 85b to retain the bearing elements on 85a, 85b on the sleeve 83.

In a second step 2000, the bearing element preassembly 81 is installed on the shaft 621 of the hinge pin 62 to provide the arrangement shown in Figure 5c in which the sleeve 83 of the bearing carrier 82 is received on the shaft 621, with the retainers 84 holding the bearing elements 85a, 85b in their longitudinally spaced positions along the shaft. In a third step 3000, the hinge pin 62 and bearing element preassembly is inserted through the respective shaft-receiving bores 59 of the inboard fore lugs 58a and outboard fore lugs 58bfrom a first side 581 of the set of interleaving lugs 58. As can be seen in Figure 4b, the longitudinal positions of the retainers 84 are configured to ensure that the respective bearing elements 85a, 85b become located within their respective shaft receiving bores 59 during insertion of the hinge pin 62 and bearing element preassembly 81, with longitudinal movement of the bearing elements 85a, 85b along the shaft 621 being prevented by the bearing elements 85a, 85b abutting with their respective neighbouring retainers 84. The bearing carrier 82 therefore not only maintains the longitudinal positions of the bearing elements 85a, 85b during operation of the hinge assembly 52, but also ensures that the bearing elements 85a, 85b are maintained at the correct longitudinal spacing along the shaft 621 during installation of the hinge pin 62 and bearing element preassembly. Furthermore, it will be readily apparent if the incorrect number of bearing elements have been installed upon the bearing carrier 82, so the use of a bearing carrier to form a bearing element preassembly in accordance with the present invention may reduce the likelihood of an incorrect number of bearing elements being installed in a hinge assembly.

In a fourth step 4000, the bearing element 851 is installed on the distal end 623 of the shaft 621 from an opposite second side 582 of the set of interleaving lugs 58 and is positioned in the shaft receiving bore 59 of the inboard lug 58a at the distal end 623 of the shaft, such that the bearing element 851 is positioned between the shaft 621 and inboard lug 58a, as can be seen in Figure 4b. The bearing element 851 comprises a flange 852 and so cannot be inserted through the interleaving lugs 58 upon the hinge pin 62. A bolt 624 is then fastened to the distal end of the hinge pin 62 to secure the hinge pin 62 and bearing elements 85a, 85b, 851 within the hinge assembly 52.

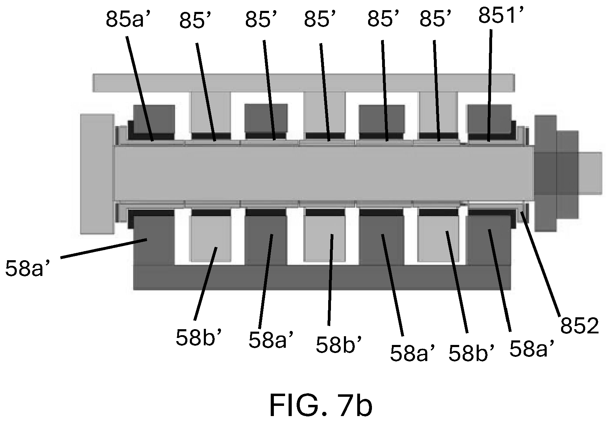

A bearing element preassembly 81' according to a further embodiment of the invention is shown in Figure 7a. In this case, the bearing carrier 82', comprises an elongate sleeve 83' having only a first retainer 84a' positioned at a first longitudinal end 831 of the sleeve 83' and a second retainer 84b' at an opposite second longitudinal end 831 of the sleeve 83'. The six bearing elements 85' are distributed longitudinally along the sleeve 83' of the bearing carrier 82', with each respective bearing element 85' being in abutment with its respective neighbouring bearing element(s) 85'.

In the presently described embodiment of the invention, there are no retainers positioned between the respective bearing elements 85' which are mounted upon the sleeve 84'. Movement of the bearing elements 85' along the shaft 621' is therefore restricted by the bearing elements 85a', 85b' at the respective first and second ends 831, 832 of the sleeve 83' abutting with the respective first and second retainers 84a', 84b and by the bearing elements 85' being in abutment with one another. Note that in the presently described embodiment of the invention, the bearing elements 85' are longer in the longitudinal direction than the bearing elements 85 described above in order to account for the longitudinal spacing between the respective inboard 58a and outboard lugs 58b in the absence of retainers being positioned between each respective bearing element 85.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. An aircraft wing, comprising:
a fixed wing;
an outboard wing section outboard of the fixed wing; and
a hinge assembly connecting the outboard wing section to the fixed wing,
wherein the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein the hinge assembly comprises:
a set of inboard lugs associated with the fixed wing and a set of outboard lugs associated with the outboard wing section, each of the respective inboard lugs and respective outboard lugs including a shaft-receiving bore;
a hinge pin;
a bearing carrier mounted upon a shaft of the hinge pin; and
a plurality of bearing elements carried upon the shaft of the hinge pin by the bearing carrier;
wherein:
the inboard lugs are interleaved with the outboard lugs such that the respective shaft-receiving bores of the inboard lugs are aligned with the respective shaft-receiving bores of the outboard lugs;
the shaft of the hinge pin extends through the respective shaft-receiving bores of the inboard lugs and outboard lugs;
the bearing elements are longitudinally distributed along the shaft of the hinge pin such that each of the shaft-receiving bores contains a dedicated bearing element, each respective bearing element thereby being configured to provide a rotational interface between the shaft of the hinge pin and the respective one outboard lug or inboard lug; and
the bearing carrier is configured to restrict longitudinal movement of the bearing elements along the shaft to thereby retain the bearing elements in their respective shaft-receiving bores.

2. An aircraft wing according to claim 1, wherein the bearing carrier comprises a retainer configured to abut with one or more of the bearing elements to prevent longitudinal movement of the one or more of the bearing elements along the shaft.

3. An aircraft wing according to claim 2, wherein the bearing carrier comprises a first retainer at a first longitudinal end of the bearing carrier and a second retainer at an opposite second longitudinal end of the bearing carrier such that the plurality of bearing elements is positioned between the first and second retainers, the first retainer thereby restricting longitudinal movement of the bearing elements along the shaft in a first direction and the second retainer restricting longitudinal movement of the bearing elements along the shaft in an opposite second direction.

4. An aircraft wing according to claim 2 or claim 3, wherein the bearing carrier comprises a plurality of longitudinally spaced retainers and one of the plurality of retainers is positioned between each of the bearing elements to longitudinally space the bearing elements along the shaft, the longitudinal spacing between the retainers being configured to retain the respective bearing elements in their respective shaft receiving bores.

5. An aircraft wing according to any of claims 2 to 4, wherein the bearing carrier comprises a sleeve which extends longitudinally along the shaft; at least two of the bearing elements are carried upon the sleeve; and the or each retainer projects from a surface of the sleeve.

6. An aircraft wing according to claim 5 comprising a further bearing element, wherein the further bearing element is not carried upon the sleeve and is spaced-apart from a bearing element carried upon the sleeve by a retainer.

7. An aircraft wing according to any preceding claim, wherein the bearing carrier comprises a polymer.

8. An aircraft wing according to any preceding claim, wherein each bearing element comprises a bushing.

9. An aircraft wing according to any preceding claim comprising a joint assembly, the joint assembly comprising the hinge assembly, wherein the inboard set of lugs of the fixed wing are provided by a first structural fitting of the joint assembly, and the outboard set of lugs of the outboard wing section are provided by a second structural fitting of the joint assembly; and the fixed wing comprises a tip with the first structural fitting fixedly connected thereto, and the outboard wing section comprises a root with the second structural fitting connected thereto.

10. An aircraft wing, comprising:
a fixed wing;
an outboard wing section outboard of the fixed wing; and
a hinge assembly connecting the outboard wing section to the fixed wing, wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein, the hinge assembly comprises:
a set of interleaving lugs comprising lugs forming part of the fixed wing and lugs forming part of the outboard wing section;
a hinge pin extending through set of interleaving lugs, thereby forming a hinge; and
an inboard bearing element positioned within each lug associated with the fixed wing, the inboard bearing element(s) being configured to provide a rotational interface between each respective lug associated with the fixed wing and the hinge pin;
an outboard bearing element positioned within each lug associated with the outboard wing section, the outboard bearing element(s) being configured to provide a rotational interface between each respective lug associated with the outboard wing section and the hinge pin; and
a bearing carrier comprising one or more retainers configured to restrict longitudinal movement of the respective inboard and outboard bearing elements along the shaft to thereby retain the bearing elements within their respective lugs.

11. An aircraft comprising the aircraft wing according to any preceding claim.

12. A joint assembly for the aircraft wing according to claim 9, the joint assembly comprising:
the first structural fitting for fixing to the tip of the fixed wing,
the second structural fitting for fixing to the root of the outboard section of wing,
the hinge pin;
a bearing carrier mounted upon a shaft of the hinge pin; and
the plurality of bearing elements carried upon the shaft of the hinge pin by the bearing carrier;
wherein:
the inboard lugs of the first structural fitting are interleaved with the outboard lugs of the second structural fitting such that the respective shaft-receiving bores of the inboard lugs are aligned with the respective shaft-receiving bores of the outboard lugs;
the shaft of the hinge pin extends through the respective shaft-receiving bores of the inboard lugs and outboard lugs;
the bearing elements are longitudinally distributed along the shaft of the hinge pin such that each of the shaft-receiving bores contains a dedicated bearing element, each respective bearing element thereby being configured to provide a rotational interface between the shaft of the hinge pin and the respective one outboard lug or inboard lug; and
the bearing carrier is configured to restrict longitudinal movement of the bearing elements along the shaft to thereby retain the bearing elements in their respective shaft-receiving bores.

13. A method of manufacturing the aircraft wing of any of claims 1 to 10 comprising the steps of:
forming a bearing element preassembly by longitudinally spacing the plurality of bearing elements along a bearing carrier, the bearing carrier being configured to restrict longitudinal movement of the bearing elements along the bearing carrier;
installing the bearing element preassembly onto the shaft of the hinge pin to provide an arrangement in which the plurality of bearing elements are longitudinally spaced along the shaft of the hinge pin by the bearing carrier and in which the plurality of bearing elements are retained on the shaft of the hinge pin by the bearing carrier; and
inserting the hinge pin and bearing element preassembly through the respective shaft receiving bores of the interleaved inboard lugs and outboard lugs to a position in which each bearing element is positioned in a respective one of the shaft receiving bores.

14. The method of claim 13, wherein the bearing carrier comprises a sleeve and a retainer which projects from a surface of the sleeve; the bearing element preassembly comprises at least two bearing elements longitudinally arranged along the sleeve; and longitudinal movement of the at least two bearing elements along the sleeve is restricted by at least one of the bearing elements abutting with the retainer.

15. A bearing element preassembly for installation in a wing hinge assembly in accordance with the method of claim 13, the bearing element preassembly comprising a bearing carrier and at least two bearing elements, wherein the bearing carrier comprises a sleeve and a retainer which projects from a surface of the sleeve; the at least two bearing elements are longitudinally arranged along the sleeve; and longitudinal movement of the at least two bearing elements along the sleeve is restricted by at least one of the bearing elements abutting with the retainer.
